# EUROPEAN PATENT APPLICATION

(11) **EP 0 818 902 A2**
(43) Date of publication of application: **14.01.1998**
(21) Application number: 97304383.9
(22) Date of filing: 23.06.1997
(51) Int. Cl.: H04J 14/02, H04L 12/56, H04J 3/24

(54) **Telecommunication networks**

(30) Priority: 10.07.1996 GB 9614489
(71) Applicant: GPT LIMITED, Coventry, CV3 1HJ (GB)
(72) Inventor: Chopping, Geoffrey, Wimborne, Dorset BH21 4HD (GB); Philip, Alexander Schroder, Wimborne, Dorset, BH21 2QL (GB)
(74) Representative: Branfield, Henry Anthony

(57) **Abstract**

A Network has a non-ring architecture and is based on a transmission medium having a broadband electromagnetic spectrum and has a plurality of transmitters, each transmitter being locked to a specific wavelength and transmitting a regular frame sequence of Data Bursts, each Data Burst containing a Preamble and Tributary Identification Number. There is also a plurality of receivers each receiver being tuneable to any of the transmitters and each receiver being tuned in a corresponding definable regular frame sequence to some or all of the transmitters in order to receive the Data Bursts intended for that receiver.

The Network typically uses either optical transmission via a Passive Optical Network (PON), or a radio transmission network.

## Description

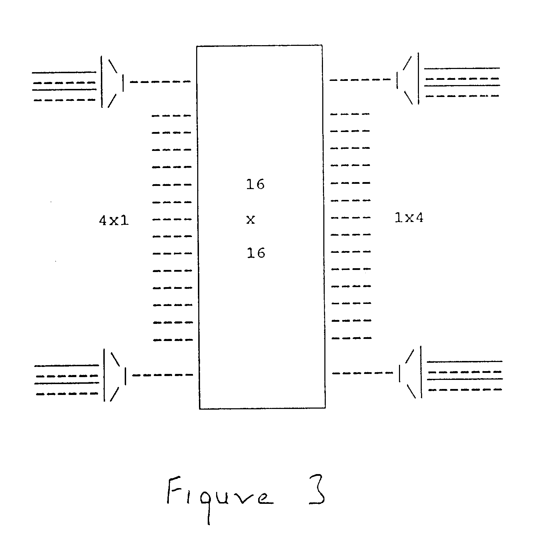

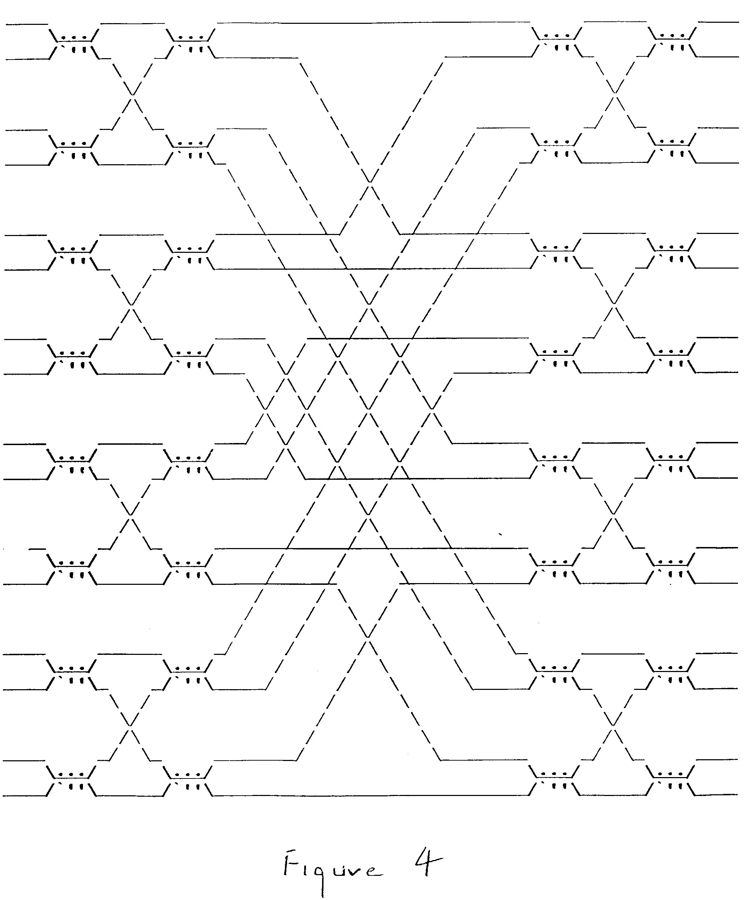

Telecommunications Networks, for example Local Area Networks (LAN's) are associated normally with ring architectures. A Network of the present invention is not based on a Ring, but on a format using a broadband electromagnetic spectrum for transmission, for example, on a Passive Optical Network (PON) or radio network. A PON with 64 inputs and 64 outputs, as shown in Figure 3, can be made from two back to back tree and branch combiner/splitters on a path. By using a matrix as shown in Figure 4 this can be reduced to eight 2 by 2 optical combiner/splitters on a path. The form of the PON is not critical to the principle, but trying to avoid the need for optical amplifiers could be well worthwhile.

According to the present invention there is provided a Network having a non-ring architecture and based on a transmission medium having a broadband electromagnetic spectrum and comprising a plurality of transmitters, each transmitter being locked to a specific wavelength and transmitting a regular frame sequence of Data Bursts, each Data Burst containing a Preamble and Tributary Identification Number; and a plurality of receivers each receiver being tuneable to any of the transmitters and each receiver being tuned in a corresponding definable regular frame sequence to some or all of the transmitters in order to receive the Data Bursts intended for that receiver.

The Network may use optical transmission via a PON or use a radio transmission network.

The present invention will now be described by way of example, with reference to the accompanying drawings, in which:
Figure 1 illustrates a Forward Rotation DMR;
Figure 2 illustrates a Backward Rotation DMR;
Figure 3 shows a diagrammatic view of a 64 x 64 Way Passive Optical Network; and
Figure 4 shows a diagrammatic view of a 4-stage 16 x 16 Passive Optic Combiner/Splitter.

As will be seen the functional capacity between two ports reduces with size. For a power limited system using a Demultiplex, Mix, Remultiplex (DMR) arrangement, it is expected that the capacity will fall with the square of the number of ports. It may not reach 64 ports without coherent techniques, but is expected to function well with 16 ports.

A non-DMR arrangement and arrangements using alternative transmission means such as ratio are also considered.

A DMR is described in US Patents Nos. 4,425,640 and 5,303,232 corresponding to GB 2,074,815 and GB 2,244,408 respectively.

The term tributary (Trib) has been used for this Network arrangement. For simplicity the example the example shows just 4 tributaries.

Considering initially the DMR principle of operation, each tributary port has one transmitter and one receiver.

Each transmitter is locked to one wavelength, and each receiver can be rapidly locked to any transmitter. Each receiver is locked in turn to all of the other transmitters (including its own complementary transmitter for forward rotation).

For a receiver to change to a new receiver a sufficient Preamble is required with a transmitter identity code and the identity of the next Trib code contained within it. The transmitter for Trib A is assumed to be the timing master. The receiver for Trib A can also act as wavelength monitor for all transmitter.

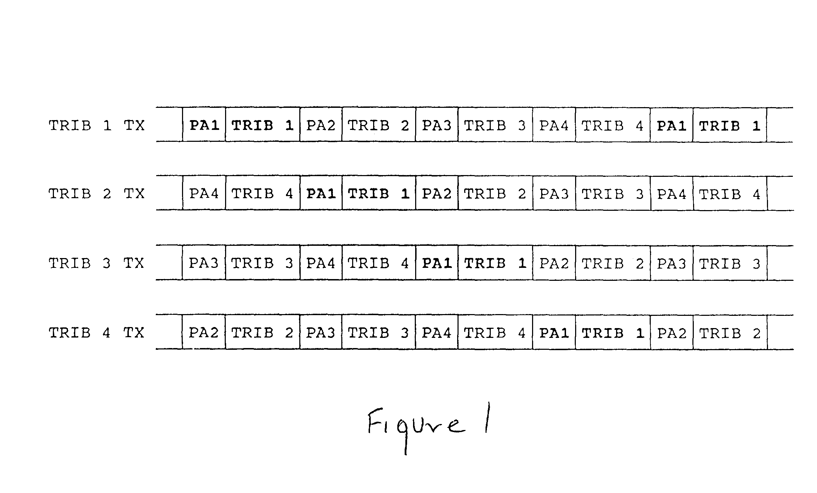

Considering operation with a forward rotation DMR, as shown in Figure 1, when a receiver is receiving from TX1 it should be launching tributary data for tributary 1, which makes the timing organisation easier. It also means that when TRIB A is sending to TRIB B then TRIB B is sending to TRIB A. Depending on the length of the Trib data period this could work as a duplex link. Figure 1 shows four tributaries TRIB 1, TRIB2, TRIB3, TRIB4 and PA1, PA2, PA3, PA4 represent the data preamble and TX represents the transmitter.

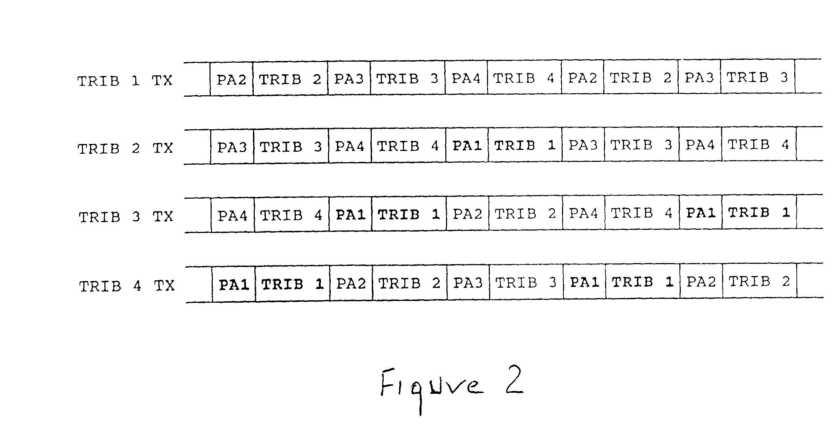

Considering a backward rotation DMR as shown in Figure 2, the sequence has only 3 tributary periods per loop and not 4, the missing period being when all the transmitters would be launching tributary data to their own receiver.

This makes the system more efficient, but only rarely are the data transfers duplex, most of them are skewed.

For the above methods (whether backwards or forwards rotation) very fast tuning of the receivers is necessary.

If the Preamble time (Pt) equals the tributary period time and there are N ports then the repeat period is 2N.Pt or 2 (N-1) Pt for forward or backward rotation DMRs respectively.

For a non-DMR arrangement, the transmitters each still launch on a single different frequency.

There is two way communication between the controlling tributary TRIB 1 and all the others.

The allocation of a matching free transmitter period with a free receiver free period has a remarkable similarity between with hunting a free cross office slot on a 3 stage switch.

Duplex path correlation should be used.

If each port is only half loaded, the Network will be non-blocking.

Unlike the DMR arrangements, the number of slots may need to be larger than the number of ports.

A transmitter transmits in bursts with a guard band in between each pair of bursts. The receiver must retune within the guard band. DMR slot lengths to suit cordless terminals may be used in the radio domain.

In the non-DMR mode, broadcasting is possible. 50% loading ensures that it is non-blocking for point to point, but not for broadcast, unless rearrangement is used, but this could be considered for a LAN as opposed to a public network.

## Claims

1. A Network having a non-ring architecture and based on a transmission medium having a broadband electromagnetic spectrum and comprising a plurality of transmitters, each transmitter being locked to a specific wavelength and transmitting a regular frame sequence of Data Bursts, each Data Burst containing a Preamble and Tributary Identification Number; and a plurality of receivers each receiver being tuneable to any of the transmitters and each receiver being tuned in a corresponding definable regular frame sequence to some or all of the transmitters in order to receive the Data Bursts intended for that receiver.

2. A Network as claimed in Claim 1, using optical transmission via a Passive Optical Network (PON).

3. A Network as claimed in Claim 1, using a Radio Transmission Network.

4. A Network as claimed in Claim 1, 2 or 3, where the transmitter regular frame sequence and the receiver corresponding definable regular frame sequence are arranged to function as a Demultiplex, Mix, Remultiplex (DMR).

5. A Network as claimed in Claim 4, wherein the DMR is arranged for forward rotation.

6. A Network as claimed in Claim 4, wherein the DMR is arranged for backward rotation.
